# EUROPÄISCHE PATENTSCHRIFT

(11) **EP 1 172 573 B1**
(45) Veröffentlichungstag und Bekanntmachung des Hinweises auf die Patenterteilung: **07.09.2005**
(21) Anmeldenummer: 01116818.4
(22) Anmeldetag: 10.07.2001
(51) Int. Cl.: F16B 39/282, F16B 35/04, F16B 35/06, F16B 37/06

(54) **Verdreh- und auspresssicher in ein Blech einpressbares Befestigungselement**
Fastening element for press fiting, which is fitted free of rotation and pressing out in a steel plate
Element de fixation pour insertion à force dans une tole de telle façon qu'il ne puisse ni faire sortir, ni tourner

(30) Priorität: 12.07.2000 DE 20012097 U
(43) Veröffentlichungstag der Anmeldung: 16.01.2002
(73) Patentinhaber: TEXTRON VERBINDUNGSTECHNIK GmbH & Co. OHG, 56567 Neuwied (DE)
(72) Erfinder: Ross, Gerold, Dipl.-Ing., 56170 Bendorf (DE)
(74) Vertreter: Beck, Alexander

(56) Entgegenhaltungen:
- EP-A- 0 398 025
- WO-A-94/01688
- WO-A-95/27147
- US-A- 3 127 919
- US-A- 3 782 436
- US-A- 4 637 766

## Beschreibung

Die vorliegende Erfindung betrifft ein Befestigungselement gemäß dem Oberbegriff des Anspruchs 1.

Solche Befestigungselemente können sowohl als Bolzen (mit Stift mit Außengewinde) als auch als Mutter (mit durchlaufender Bohrung mit Innengewinde) ausgeführt werden. Ein entsprechendes Befestigungselement ist beispielsweise aus der WO 94/01688 bekannt.

Ähnliche Konstruktionen sind beispielsweise aus der DE 44 10 475 A1, DE 195 35 537 A1 und WO 98/51934 bekannt.

Bei all diesen Befestigungselementen besteht das Problem, daß sie bei Blechstärken um oder unter 1 mm nicht mehr oder nur mit verminderter Funktionalität verwendet werden können, da dann die entsprechende Verdreh- und/oder Auspreßsicherheit nicht mehr gegeben ist.

Es ist daher Aufgabe der vorliegenden Erfindung, ein solches Befestigungselement dergestalt weiterzubilden, daß es auch in Blechstärken von um oder sogar unter 1 mm mit hinreichender Verdreh- und Auspreßsicherheit eingesetzt werden kann, ohne daß eine besondere Vorbereitung der Löcher, in die das Verbindungselement gesetzt werden soll, erforderlich ist. Bei Lösungen wie der DE 44 10 475 A1 oder der WO 94/01688 muß nämlich um das Setzloch herum ein dort sogenannter "Kragen" aus Blech gebildet werden, damit eine ausreichende Verdreh- und Auspreßsicherheit auch bei dünneren Blechen gewährleistet ist. Dies erfordert nachteilhafterweise einen zusätzlichen Arbeitsschritt, in dem der entsprechende "Kragen" geformt werden muß.

Gemäß dem Stand der Technik ist man bisher davon ausgegangen, daß eine bestmögliche Verdreh- und Auspreßsicherheit des Befestigungselementes dann erreicht wird, wenn in der Nähe des Gewindeträgers möglichst viel Raum zum Hineinfließen von Blechmaterial gegeben ist. Bei dünnen Blechen ist jedoch einfach nicht ausreichend Blechmaterial vorhanden, um diese Räume zu füllen. Im Stand der Technik wurden daher Hilfskonstruktionen wie beispielsweise der "Kragen" aus der WO 94/01688 entwickelt.

Demgegenüber geht die vorliegende Erfindung davon aus, daß zum Erreichen einer optimalen Verdreh- und Auspreßsicherheit bei dünnen Blechen eben nicht zu viel Raum für das verdrängte Blechmaterial zur Verfügung gestellt werden sollte, sondern nur das Volumen, welches durch eine gezielte Verformung (Fließen) des Bleches optimal gefüllt werden kann. Dieses Einformen in die Ringaussparung erfolgt über eine Fließverformung des Blechmaterials, verursacht durch die spezielle Form der Stege.

Erfindungsgemäß wird die o.g. Aufgabe durch den Gegenstand des Anspruchs 1 gelöst.

Durch eine solche Konstruktion wird auch bei sehr dünnen Blechen eine ausreichende Verdreh- und Auspreßsicherheit des Befestigungselements erreicht.

Zur weiteren Verbesserung der Verdrehsicherheit ist es erfindungsgemäß bevorzugt, wenn die Stege einen im wesentlichen rechteckigen Querschnitt aufweisen und ihre Seitenwände senkrecht auf der dem Blech zugewandten Seite des Kopfes stehen. Dadurch wird der Eingriff der Stege in das Blechmaterial weiter verbessert.

Im folgenden wird die Erfindung anhand von zwei in den beigefügten Zeichnungen dargestellten Ausführungsbeispielen näher erläutert. Es zeigt:
Fig. 1 ein erfindungsgemäßes Befestigungselement als Bolzen von der Seite;
Fig. 2 das Befestigungselement der Fig. 1 von unten, wobei der Schaft in der Höhe der Ringausnehmung weggeschnitten ist;
Fig. 3 eine Detaildarstellung der Ringausnehmung und der Stege des Befestigungselements der Fig. 1;
Fig. 4 eine Schnittdarstellung eines Steges des Befestigungselements der Fig. 1, wobei der Schnitt quer zur Verlaufsrichtung des Steges ausgeführt ist;
Fig. 5 das Befestigungselement der Fig. 1 kurz vor dem Setzen in ein Blech;
Fig. 6 das Befestigungselement der Fig. 1 nachdem es in ein Blech eingepreßt ist;
Fig. 7 ein weiteres, diesmal mutternförmig, also mit Innengewinde ausgeführtes erfindungsgemäßes Befestigungselement;
Fig. 8 das Befestigungselement der Fig. 7 von unten (also von der Blechseite her gesehen); und
Fig. 9 das Befestigungselement der Fig. 7 im in ein Blech eingegepreßten Zustand (teilweise geschnitten).

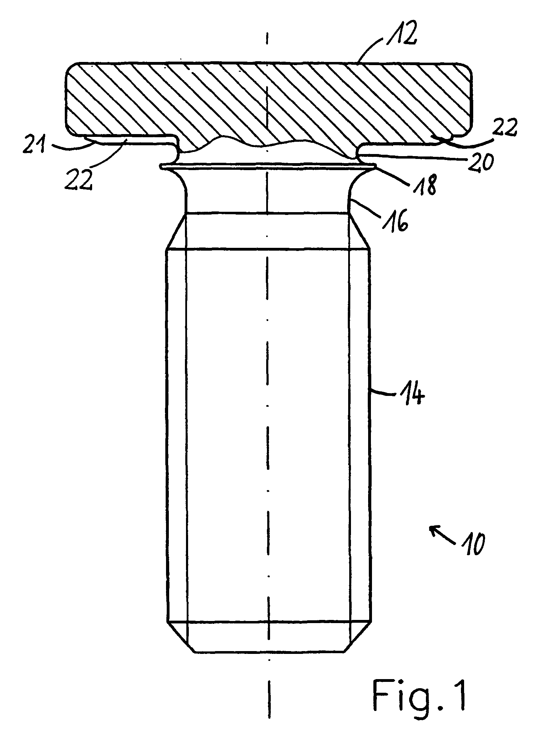

Fig. 1 zeigt ein erfindungsgemäßes Befestigungselement in Bolzenform, d.h. mit einem Stift mit Außengewinde. Das erfindungsgemäße Befestigungselement 10 umfaßt einen Kopf 12 und einen ein Außengewinde tragenden Schaft 14. Zwischen dem Gewinde und dem Kopf 12 sind in dieser Reihenfolge ein Kalibrierbund 16, ein ringförmiger Vorsprung 18 und eine ringförmige Nut 20 mit etwa halbkreisförmigem Querschnitt angeordnet. Auf der Unterseite des Kopfes 12, die beim Setzen des Befestigungselementes dem Blech zugewandt ist, sind radial verlaufende Stege 22 angeordnet, die eine im radialen Verlauf im wesentlichen gleichbleibende Höhe aufweisen und lediglich im radialen Außenbereich 21 abgeflacht sind.

Der Kopf 12 ist teilweise geschnitten dargestellt, wobei auf der rechten Seite der entsprechende Steg 22 ebenfalls geschnitten dargestellt ist, während der entsprechende Steg 22 auf der linken Seite nicht geschnitten dargestellt ist.

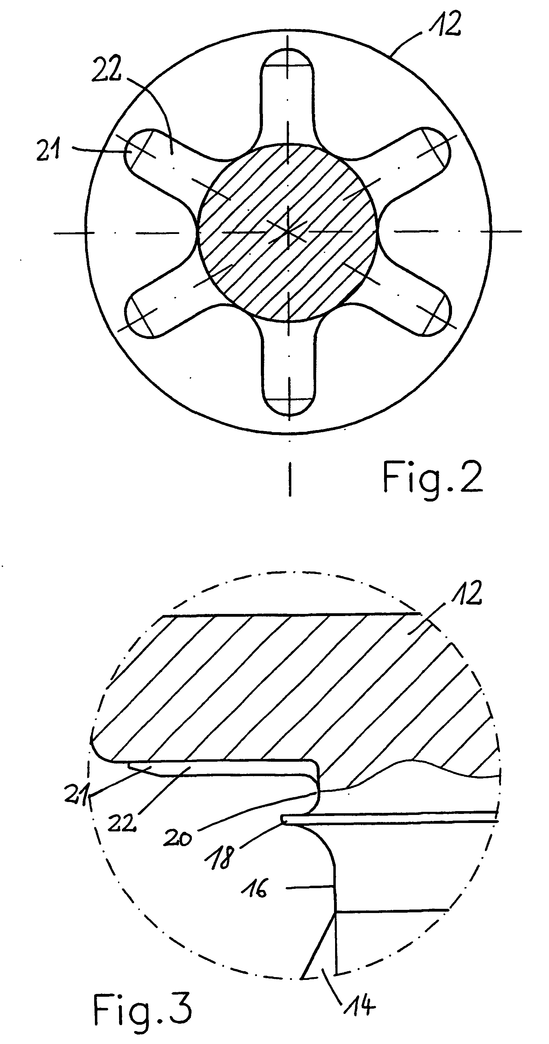

Die Fig. 2 zeigt den Kopf 12 des Befestigungselementes der Fig. 1 von unten, wobei der Schaft in Höhe der umlaufenden Ringnut 20 abgeschnitten ist. In Fig. 2 ist die Form der Stege 22 besonders gut erkennbar. Die Stege 22 verlaufen radial mit im wesentlichen konstanter Breite und sind lediglich im radialen Außenbereich 21 nahe dem Außenrand des Schraubenkopfes 12 in ihrer Höhe abgeflacht und in der Breite abgerundet. Auf den Schaft 14 hin gehen die Stege 22 abgerundet in die Ringnut 20 über.

Fig. 3 zeigt eine Detaildarstellung des Übergangsbereiches zwischen Kopf 12 und Gewindeträger 14. In Fig. 3 ist die Abflachung des Steges 22 im Außenbereich 21 besonders deutlich zu erkennen.

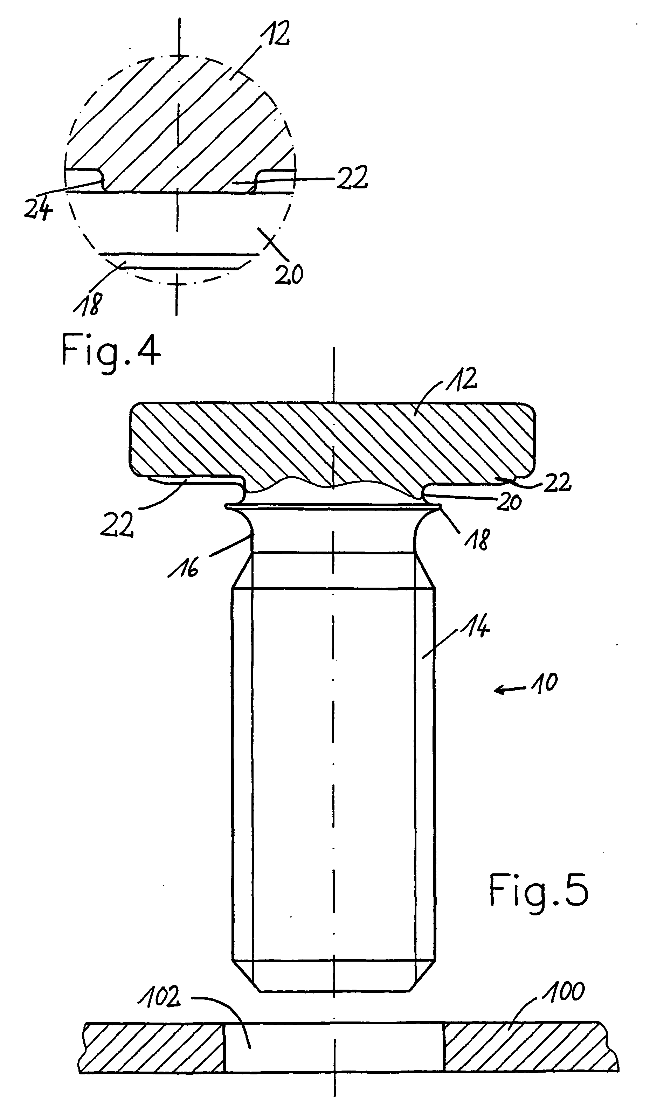

Die Fig. 4 zeigt ein Detail, nämlich die Schnittdarstellung eines Steges 22 quer zur Radialrichtung des Kopfes 12 geschnitten. Hier ist besonders gut erkennbar, wie die Stege 22 im Querschnitt geformt sind. Die Stege 22 weisen im wesentlichen einen flach-rechteckigen Querschnitt auf und sind durch im wesentlichen senkrecht zu der Ebene des Kopfes 12 stehende Wände 24 begrenzt. Ansonsten ist die beim Setzen dem Blech zugewandte Oberfläche der Stege 22 im wesentlichen plan und parallel zu der Ebene des Kopfes 12.

Die Fig. 5 zeigt das Befestigungselement der Fig. 1 kurz vor dem Einsetzen in ein Blech 100 mit einem entsprechenden Loch 102. Der Druchmesser des Loches 102 ist so gewählt, daß das Befestigungselement mit dem ringförmigen Vorsprung 18 gerade kontaktfrei eingeführt werden kann.

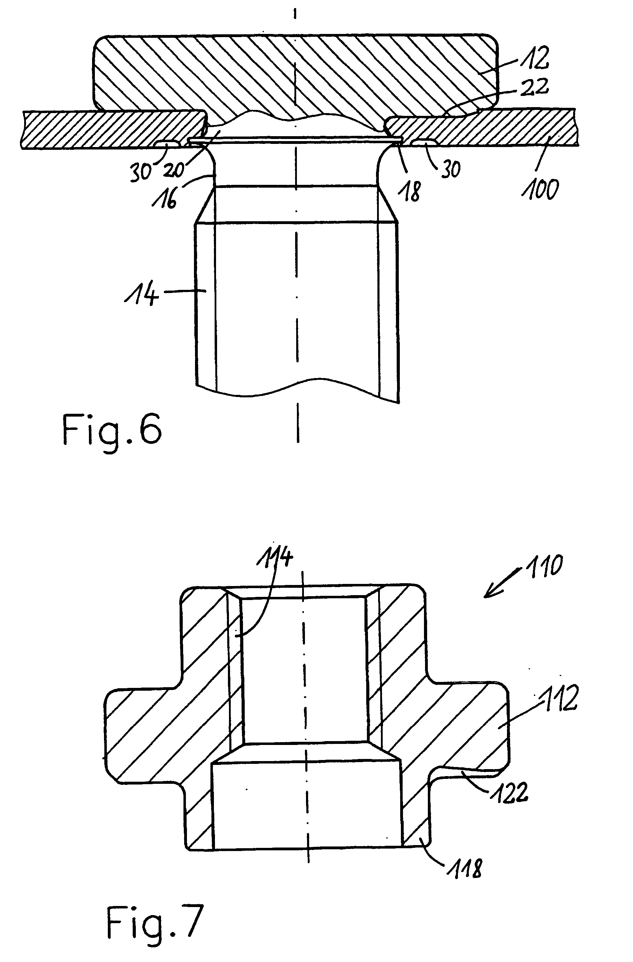

In Fig. 6 sind deutlich die Eindrücke 30 zu sehen, die von dem beim Einpreßen verwendeten Gegenwerkzeug stammen. Es ist ebenso deutlich zu erkennen, wie die Ringnut 20 im Bereich eines Steges 22 vollständig mit verdrängtem Blechmaterial gefüllt worden ist (rechts in Fig. 6), während links in Fig. 6 zu erkennen ist, daß in den Bereichen, in denen kein Steg 22 vorhanden ist, die Ringnut 20 fast vollständig mit verdängtem Blechmaterial gefüllt worden ist.

Die Eindrücke 30 können aufgrund der erfindungsgemäßen Ausführung der Stege 22 und der Geometrie der Ringnut 20 so flach gehalten werden, daß keine maßgebliche Schwächung der Steifigkeit des Bleches auch bei kleinen Blechdicken eintritt.

Fig. 7 zeigt eine weitere Ausführungsform der Erfindung, wobei die Erfindung diesmal bei einem als Mutter dienenden Befestigungselement, also bei einem Befestigungselement mit einem Innengewinde realisiert ist.

Dieses weitere erfindungsgemäße Befestigungselement 110 dient als Einpreßmutter und weist eine im wesentlichen zylindrische Form auf. In der Mitte besitzt es einen breiten umlaufenden Ring 112. Im Zentrum des zylindrischen Befestigungselements 110 befindet sich eine durchgehende Bohrung, die zumindest über einen Teil der Höhe des Befestigungselementes 110 hinweg einem Gewindeträger 114 mit einem Innengewinde bildet. Unterhalb des umlaufenden Ringes 112 ist die zentrische Bohrung noch erweitert, so daß in diesem Bereich nur ein relativ dünner kreisringförmig umlaufender Steg 118 vorhanden ist.

Das erfindungsgemäße Befestigungselement 110 ist dafür vorgesehen, mit dem Steg 118 voraus in ein Loch in einem Blech 100 eingesetzt zu werden. An der im gesetzten Zustand dem Blech 100 zugekehrten Seite, also der Unterseite des umlaufenden Ringes 112 befinden sich auch hier Stege 122, die in ihrer Form ebenso ausgebildet sind, wie die Stege 22 des Ausführungsbeispiels gemäß Fig. 1.

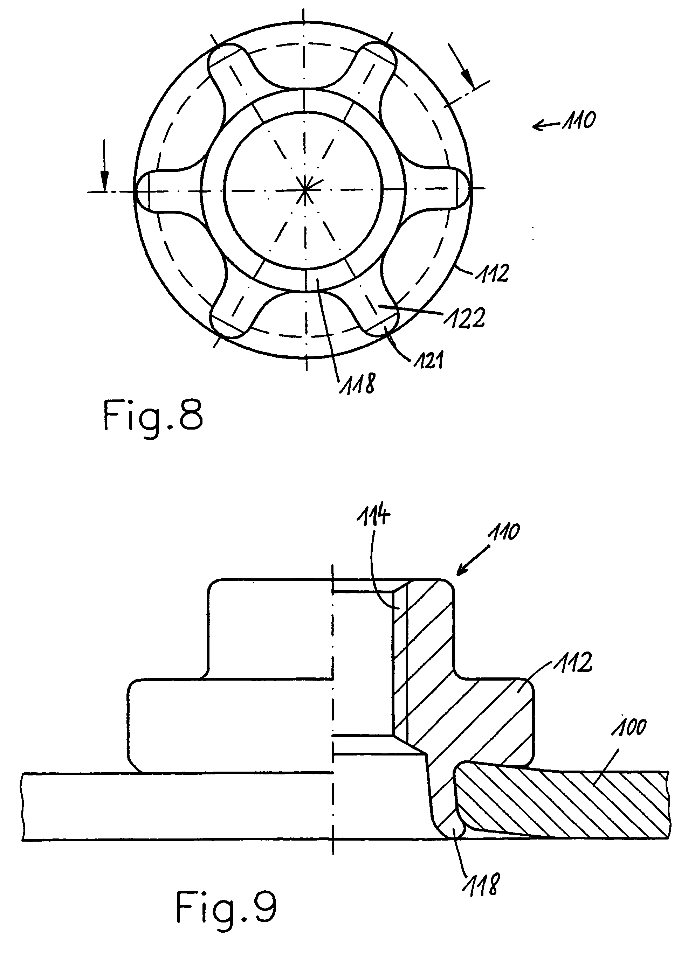

Form und Anordnung der Stege 122 lassen sich noch wesentlich besser anhand der Fig. 8 erläutern. Diese zeigt das Befestigungselement der Fig. 7 von unten. Auch hier weisen die radial verlaufenden Stege 122 in Radialrichtung eine im wesentlichen konstante Breite auf. Lediglich im radialen Außenbereich 121 sind sie in der Breite abgerundet und in der Höhe abgeflacht. Ansonsten trifft für die Stege 122 die gleiche Querschnittsdarstellung wie für die Stege 22 in Fig. 4 zu. Sie weisen also eine im wesentlichen plane und zu der Ebene des Ringes 112 parallele, nach unten gerichtete Oberfläche und dazu im wesentlichen senkrecht stehende Seitenwände auf. Lediglich in Richtung auf den Ring 118, also nach innen hin, gehen die Stege 122 abgerundet in diesen Ring über, so daß sie im radialen Innenbereich eine abgerundete Verbreiterung aufweisen.

Die Unterseite des Ringes 112 kann nach innen hin leicht eingezogen sein, so daß in diesem Bereich die Unterseite des Ringes 112 nicht horizontal sondern leicht konkav verläuft.

Fig. 9 zeigt das Befestigungselement der Fig. 7 im gesetzten Zustand. Das Befestigungselement 110 ist dabei in ein Loch entsprechenden Durchmessers in dem Blech 100 eingepreßt. Das Loch im Blech 100 sollte dabei einen Durchmesser haben, der es erlaubt, das Befestigungselement 110 mit dem umlaufenden Steg 118 gerade kontaktfrei in das Loch 102 einzusetzen. Beim Setzvorgang wird der umlaufende Steg 118 durch ein entsprechend geeignetes Gegenwerkzeug nach außen gedrückt, wodurch das Blech in die Kante zwischen umlaufendem Steg 118 und Ring 112 und zwischen die jeweiligen Stege 122 verdrängt wird. Hierdurch ergibt sich auch hier die entsprechende Verdreh- und Auspreßsicherheit. Auch hier ist die Form der Stege 122 von entscheidender Bedeutung, um ein vollständiges Füllen des Raumes zwischen dem umlaufenden Steg 118 und dem Ring 112 auch beim Setzen des erfindungsgemäßen Befestigungselementes in ein sehr dünnes Blech 100 zu bewirken.

## Patentansprüche

1. Befestigungselement (10; 110), welches dazu geeignet ist, verdreh- und auspreßsicher in ein in einem Blech (100) befindliches Loch (102) eingepresst zu werden, mit einem Kopf (12) oder Ring (112), dessen nach dem Einsetzen dem Blech (100) zugewandte Seite radial angeordnete Stege (22; 122) aufweist, die sich beim Einsetzen in ein Blech eindrücken und in deren Mitte ein zylindrischer Gewindeträger (14; 114) angeordnet ist, der durch das Blech (100) hindurch und auf der anderen Seite des Bleches (100) heraus ragt, und der an der im gesetzten Zustand dem Blech (100) zugewandten Seite des Kopfes (12) oder Ringes (112) eine umlaufende Ringausnehmung (20; 120) aufweist, in die das beim Setzen verdrängte Blechmaterial eingepresst werden kann, wobei die Stege (22; 122) über einen Großteil ihrer Radialerstreckung konstante Höhe und Breite aufweisen, **dadurch gekennzeichnet, dass** die Stege (22; 122) auf den zylindrischen Gewindeträger (14; 114) hin mit zunehmender Breite fließend in diesen übergehen, während die Stege (22; 122) im radialen Außenbereich (21; 121) seitlich abgerundet und flach auslaufen.

2. Befestigungselement nach Anspruch 1, **dadurch gekennzeichnet, dass** die Stege (22; 122) einen im wesentlichen rechteckigen Querschnitt aufweisen und ihre Seitenwände (24) senkrecht auf der dem Blech (100) zugewandten Seite des Kopfes (12) oder Ringes (112) stehen.

## Claims

1. Fastener being pressable into a metal sheet (100) in a way safe against rotation and pressing out, having a head (12) or ring (112) the side of which after insertion facing the metal sheet (100) is having radially positioned ridges (22, 122), which, when setting the fastener, are pressed into the metal sheet (100), wherein a cylindrical thread-carrier (14, 114) is positioned in the centre of said ridges (22, 122) projecting through the metal sheet (100) beyond the other side of the metal sheet (100) and which in the vicinity of the side of the head (12) or ring (112) facing the metal sheet (100) in the set state is having a circumferential annular recess (20, 120) into which the material of the metal sheet (100) displaced during the setting can be pressed, wherein the ridges (20, 122) over a majority of their radial extension are having a constant height and width, **characterised in that** the ridges (22, 122) are in the vicinity of the thread-carrier (14, 114) smoothly merging with the same with an increasing width, while the ridges (22, 122) in the radial exterior region (21, 121) are tapering off in a sidewardly rounded and flat manner.

2. Fastener according to claim 1, **characterised in that** the ridges (22, 122) are having a generally rectangular cross-section with their side walls (24) perpendicular to the side of the head (12) or ring (112) facing the metal sheet (100).

## Revendications

1. Elément de fixation (10, 110), approprié pour être introduit en force, de manière à ne pouvoir tourner ni être extrait, dans un trou (102) situé dans une tôle (100), comportant une tête (12) ou une bride annulaire (112) dont la face tournée vers la tôle (100) après insertion présente des nervures (22 ; 122) disposées radialement, qui s'impriment dans la tôle lors de la mise en place et au milieu desquelles est disposé un goujon cylindrique fileté (14 ; 114) qui traverse la tôle (100) et dépasse de l'autre côté de la tôle (100) et qui présente, sur la face de la tête (12) ou de la bride annulaire (122) tournée vers la tôle à l'état monté une rainure annulaire périphérique (20 ;120) dans laquelle peut être repoussée la matière de la tôle refoulée lors de l'introduction, les nervures (22 ; 122) présentant une hauteur et une largeur constante sur la majeure partie de leur dimension radiale, **caractérisé en ce que** les nervures (22 ; 122) évoluent en continu vers le goujon cylindrique fileté (14 ; 114) avec une largeur croissante, tandis que le nervures (22 ; 122), évoluent dans leur zone radialement extérieure (21 ; 121) de façon plate et latéralement arrondie.

2. Elément de fixation selon la revendication 1, **caractérisé en ce que** les nervures (22 ; 122) présentent une section essentiellement rectangulaire et leurs parois latérales (24) sont placées perpendiculairement à la face de la tête (12) ou de la bride annulaire (122) tournée vers la tôle (100).
